# EUROPEAN PATENT APPLICATION

(11) **EP 1 211 175 A2**
(43) Date of publication of application: **05.06.2002**
(21) Application number: 01610066.1
(22) Date of filing: 26.06.2001
(51) Int. Cl.: B64D 11/00

(54) **Replacement door for airplane overhead bin expansion**

(30) Priority: 04.12.2000 US 251308 P; 27.04.2001 US 844859
(71) Applicant: Raisbeck Commercial Air Group, Inc., Seattle, Washington 98178 (US)
(72) Inventor: Johnson, Melvin J., Seattle, Washington 98188 (US); Raisbeck, James, Seattle, Washington 98118 (US)
(74) Representative: Plougmann, Vingtoft & Partners A/S

(57) **Abstract**

The capacity of airliner overhead storage bins (1) is increased by replacing the original door with a curved replacement door (7). The replacement door (7) has an outwardly curved main panel (8), and at least one side panel (11) that fills the space between the main panel (8) of the door (7) and the bulkhead (3) of the storage bin (1).

## Description

This invention relates to overhead bin storage compartments and methods to enlarge them.

Commercial airplanes usually have overhead storage bins for stowing passenger luggage and other belongings during flight. These overhead bins are popular among passengers because things stored in them are available for use during the flight. Briefcases, purses, small packages and backpacks are often stowed in the overhead storage bins.

Because things stowed in the overhead luggage bins do not have to be checked, the passenger does not to go through baggage claim to retrieve them at the end of the flight. This is a matter of significant convenience, and as a result many passengers try to carry all of their luggage onto the plane and store it in the overhead storage bins. Many luggage manufacturers market "carry-on" bags that are specifically designed for this purpose. These bags are sized in accordance with airline guidelines governing the size of carry-on packages. These guidelines vary somewhat from airline to airline, but in the United States the typical size limits are: length of 22 inches (56 cm), width of 14 inches (36 cm) and height of 9 inches (23 cm).

Overhead bin storage space is often at a premium in a commercial airliner, especially when the flight is crowded. A significant problem on many commercial aircraft such as the Airbus narrow body family (A318, A319, A320, etc.) is that the depth (front-to-back dimension) of the overhead storage bin is shorter than the length of many carry-on bags. This requires that the bags be oriented length-wise in the bin instead of front-to-back, which would allow the bags to be packed more closely together and thus use the storage space more efficiently.

Thus, attention is being directed to increasing the storage capacity of overhead storage bins. For new aircraft, re-designing the bins in various ways can solve the problem. However, most airlines have a significant investment in older aircraft, and for these, the most cost effective way to expand storage capacity is through some manner of adapting the existing bins.

One approach to doing this is described in U. S. Patent No. 5,687,929 to Hart et al. Hart's method involves affixing a modular extension to an existing storage bin. An airline overhead storage bin typically includes a shelf, vertical sides or "bulkheads", a roof panel and a door. The shelf is the substantially horizontal member that forms the bottom of the bin and carries the weight of the stowed luggage. The front edge of the shelf typically will include a "bullnose" or similar structure that provides reinforcement to the inboard unsupported edge of the shelf and holds a catch assembly. The bulkheads extend vertically from the sides of the shelf upward to the roof panel. The bulkheads serve two main purposes: supporting the shelf and dividing the overhead storage into compartments that restrains the front-to-back movement of the luggage during flight. The roof panel is oriented generally horizontally and extends from bulkhead to bulkhead. The door is affixed to a front edge of the roof panel through a hinge assembly. The door is sized and shaped such that when closed, its side edges mate with the front edges of two bulkheads and its bottom edge mates with a front edge of the shelf to fully enclose the bin. The door has a latch assembly to secure it in a closed position. The bin extension design of Hart et al. uses a modular shelf, bulkhead and roof extension assembly to increase the volume of the bin. The bullnose and door of the existing bin are removed, and the modular shelf, bulkhead and roof extension assembly is affixed to the existing shelf and bulkheads of the bin. The old door may be re-used by affixing it to the roof extension panel, or else a new door is used.

Hart's system includes a number of parts, which must be pre-assembled. The existing bin door must be removed and the extension assembly must be attached to the existing bin at several places. The result is that Hart's system is both more expensive and labor-intensive to install than desired.

It would be desirable to provide a less expensive, simple method by which the capacity of overhead storage bins can be increased.

In one aspect, this invention is a door for an overhead storage bin, wherein the storage bin that has a substantially horizontal shelf having a front edge, substantially vertical bulkheads each of which has a front edge and a top edge and extends upwardly from the shelf, and a substantially horizontal roof that has a front edge and connects to the top edges of the vertical bulkheads. The door comprises (A) a main panel and (B) a side panel attached to a side edge of the main panel. The main panel is curved outwardly. When the door is closed, (1) a top edge of the main panel approximately meets and is aligned with the front edge of the roof of the storage bin, (2) a bottom edge of the main panel meets and approximately aligns with the front edge of the shelf or an extension thereof, (3) at least one side edge of the main panel approximately aligns with one of the bulkheads of the overhead storage bin and the main panel is spaced apart from the front edge of the bulkhead so a gap is formed between the side edge of the main panel and the front edge of the bulkhead. The side panel is sized and shaped so that when the door is closed, a rear edge of the side panel meets and aligns with the front edge of the bulkhead. The side panel thus fills the space between the main panel and the front edge of the bulkhead.

In a second aspect, this invention is an overhead storage bin comprising
(A) a substantially horizontal shelf having a front edge,
(B) substantially vertical bulkheads, each of which has a front edge and a top edge and extends upwardly from the shelf,
(C) a substantially horizontal roof that has a front edge and connects to the top edges of the vertical bulkheads, and
(D) a door.

The door has a main panel that is outwardly curved such that when the door is closed, (1) a top edge of the main panel approximately meets and is aligned with the front edge of the roof of the storage bin, (2) a bottom edge of the main panel meets and approximately aligns with the front edge of the shelf or an extension thereof, and (3) at least one side edge of the main panel approximately aligns with one of the bulkheads of the overhead storage bin and the main panel is spaced apart from the front edge of the bulkhead so a gap is formed between the side edge of the main panel and the front edge of the bulkhead. The door also has a side panel attached to a side edge of the main panel and being sized and shaped so that when the door is closed, a rear edge of the side panel meets and aligns with the front edge of the bulkhead and the side panel fills the space between the main panel and the front edge of the bulkhead.

In another aspect, this invention is a method for increasing the volume of an overhead storage bin that has a substantially horizontal shelf having a front edge, substantially vertical bulkheads each of which has a front edge and a top edge and extends upwardly the shelf, a substantially horizontal roof that has a front edge and connects to the top edges of the vertical bulkheads, and a door panel having bottom, side and top edges that meet the front edges of the shelf, at least one bulkhead and roof, respectively, when the door is closed, comprising
(A) removing the door and
(B) installing a hinged replacement door on the storage bin so that the replacement door opens upwardly and closed downwardly.

The replacement door includes a main panel that is outwardly curved such that when the door is closed, (a) a top edge of the main panel approximately meets and is aligned with the front edge of the roof of the storage bin, (b) a bottom edge of the main panel meets and approximately aligns with the front edge of the shelf or an extension thereof, and (c) at least one side edge of the main panel approximately aligns with one of the bulkheads of the overhead storage bin and the main panel is spaced apart from the front edge of the bulkhead so a gap is formed between the side edge of the main panel and the front edge of the bulkhead. The replacement door also includes a side panel attached to said side edge of the main panel and being sized and shaped so that when the door is closed, a rear edge of the side panel meets and aligns with the front edge of the bulkhead and the side panel fills the space between the main panel and the front edge of the bulkhead.

This invention provides a simple, inexpensive, yet effective way to increase the storage capacity of an overhead storage bin. In preferred embodiments, the curvature of the main panel of the replacement door is such that the depth of the bin is increased enough to permit parcels of at least 22 inches in length to be stowed front-to-back in the bins.

Figure 1 is an isometric view, partially in section, of an overhead storage bin according to the invention.

Figure 2 is a side view, in section, of an overhead storage bin according to the invention.

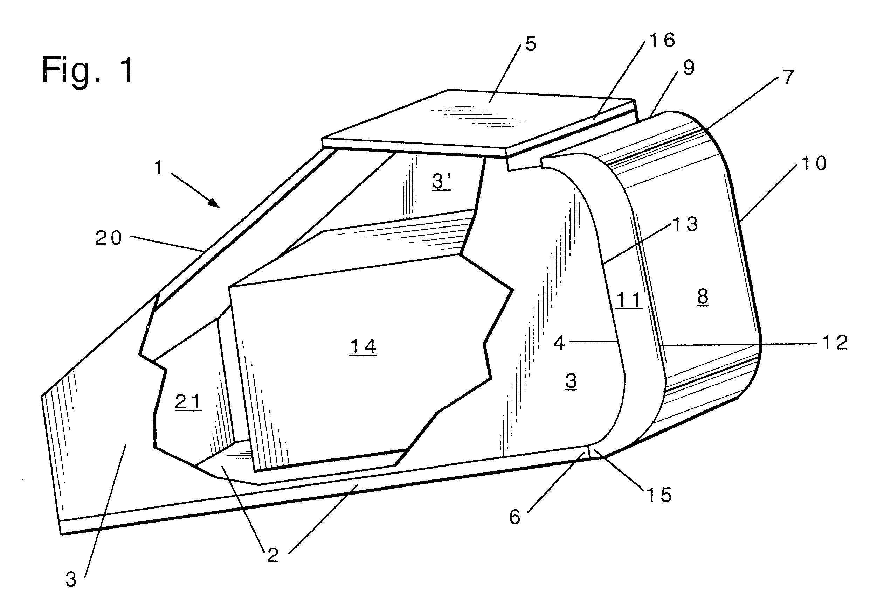

In Figure 1, overhead storage bin 1 has shelf 2, bulkheads 3 and 3', and roof 5. Overhead storage bin 1 is typically an existing bin that is affixed to an aircraft, usually through bulkheads 3 and 3', roof 5, rear panels 20 and 21 or some combination of these. Shelf 2 is generally horizontal, although it may be slightly slanted upwardly or downwardly, and it is not necessarily planar. Shelf 2 supports the load of luggage (such as case 14) that is stowed in the bin. Shelf 2 has a front edge 6. Bulkheads 3 and 3' rise more or less vertically up from shelf 2. Bulkheads 3 and 3' support the weight of shelf 2. Each bulkhead has a front edge. The front edge of bulkhead 3 is indicated by reference numeral 4. Roof 5 is substantially horizontal but also may be slanted somewhat either upwardly or downwardly, and is not necessarily planar. Roof 5 has a front edge 16. Taken together, shelf 2, bulkheads 3 and 3' and roof 5 define an enclosure. In the embodiment shown in Figure 1, the enclosure is completed by rear panels 20 and 21 and door 7.

Door 7 is hingingly mounted to overhead storage bin 1 so that it opens upwardly and closes downwardly. Door 7 includes a curved main panel 8. Main panel 8 has a top edge 9 and a bottom edge 15. Main panel 8 also has two side edges 10 and 12. At least one of these is aligned with one of the bulkheads. In this context, being aligned with the bulkhead means that the side edge lies approximately in the plane in which the corresponding bulkhead lies. Stated more generally, the side edge lies approximately along an imaginary inboard extension of the bulkhead. In the embodiment shown, the width of door 7 is approximately the same as the distance between bulkheads 3 and 3', and side edges 10 and 12 align with bulkheads 3' and 3 respectively. However, width of the door is not necessarily the same as the distance between bulkheads. In many instances, the door is significantly narrower than the distance between bulkheads, and multiple doors are used to enclose the bin.

As can be seen from Figure 1, main panel 8 is curved outwardly so that when it is in the closed position, as shown, a space is formed between main panel 8 and front edge 4 of bulkhead 3. This space is filled by side panel 11, which is affixed to side edge 12 of main panel 8 and has a rear edge 13 that meets front edge 4 of bulkhead 3 when door 7 is closed. In this way, the space between main panel 8 and bulkhead 3 is enclosed.

In the embodiment shown in Figure 1, a second side panel is affixed to side edge 10 of door 7 and similarly has a rear edge that meets a front edge of bulkhead 3'.

If the door is shorter than the distance between bulkheads, only one of the side edges of the main panel is aligned with one of the bulkheads. A side panel is affixed to this edge as before. However, it is not necessary for there to be a side panel affixed to the other side edge of the main panel, as there is no bulkhead for the side panel to meet up with. In such a case, the door may be manufactured with only a single side panel. However, as the side panels do provide some structural strength and rigidity, the second side panel may still be desirable.

It will be appreciated that when the doors are shorter than the distance between bulkheads, multiple doors will be needed for each bin. The door mounted on the left-hand side will have a side panel to align with the bulkhead on the left, and the door on the right-hand side will have a side panel to align with the bulkhead on the right. If three or more doors are used with a bin, it is not necessary for the doors in the middle (i.e., any except the right-hand and left-hand doors) to have side panels, unless the side panels are desired to improve structural strength and/or rigidity. Any such middle doors preferably have the outwardly curved main panel so as to increase the volume of the storage bin.

In the embodiment shown in Figure 1, bottom edge 15 of door 7 aligns with and meets front edge 6 of shelf 2. In some cases, it may be necessary to increase the front-to-back dimension of the bin shelf, either to achieve a desired storage volume or to best accommodate the redesigned door. Thus, in an alternative embodiment, a shelf extension may be used to increase the front-to-back dimension of the shelf of the bin. In such a case, the bottom edge of the door will align with and meet the front edge of the shelf extension, and the side panel of the door may have a bottom edge that aligns with and approximately meets the shelf extension when the door is closed. In many cases, the amount of extension may be minimal. In the case of Airbus narrow body aircraft (such as the A318, 319 and 320 models) the inboard extension can be as little as ¼ inch (0.63 cm) to 1 foot (30 cm), preferably to 6 inches (15 cm). Extensions of this magnitude are easily done by replacing the bullnose with a redesigned one that extends inboard more. Larger extensions can be had by affixing a more substantial structure to the front edge of the original shelf.

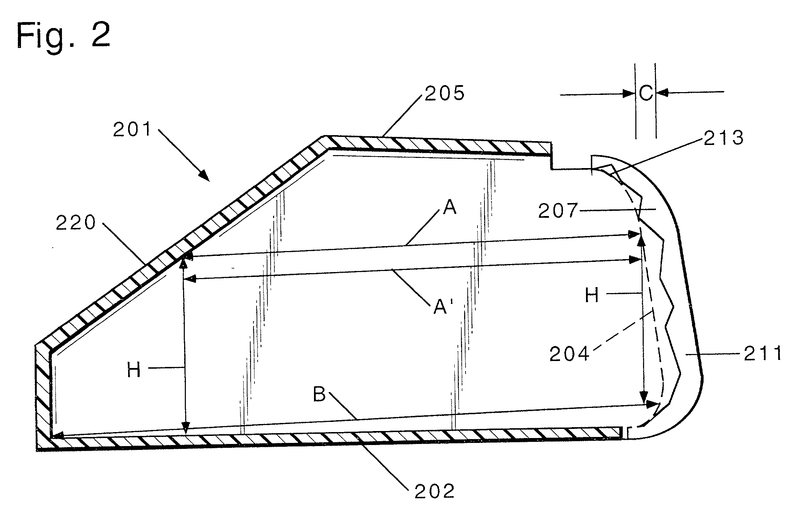

The increased volume of the retrofitted storage bin is due to the curvature of the main panel of the door, plus any shelf extension that may be used. This is illustrated in Figure 2. In Figure 2, the original front-to-rear dimension of storage bin 201 at height H above shelf 202 is A, the distance between rear panel 220 and the front edge of the bulkhead (represented as line 204). When replacement door 211 of the invention is used, this distance increases to A'.

It is of particular interest to increase the front-to-back dimensions of the storage bin to permit luggage designed as carry-on pieces to be stowed front-to-back in the bins. The longest dimension of these pieces is typically at least 22 inches (56 cm) and the height of those pieces is typically at least 9 inches (23 cm). Thus, the curvature of the main panel of the door is preferably such that the front-to-back inside dimension of the bin is at least 22 inches (56 cm) at a height of at least 9 inches (23 cm) above the shelf and all lower heights.

In order to accomplish this, the curvature of the main panel of the replacement door is such that front-to-back inside dimension of the bin is increased by at least one inch to 8 inches (20 cm), preferably to 6 inches (15 cm) more preferably to 4 inches (10 cm), at a height of 9 inches (23 cm) above the shelf, when the door is closed.

In addition to the main and side panels, the replacement door can include any suitable hardware for mounting it to the storage bin and a suitable latch for closing it. The door may be formed with recesses and/or bosses for mounting the hardware and latches. The door may be shaped and/or beveled in various ways for cosmetic purposes, provided the curvature of the main panel is maintained.

The mounting hardware is adapted to permit the door to be opened upwardly and closed downwardly. A variety of types of hardware are readily available for this purpose, and no special mounting hardware design is usually required. Springs, shock absorbers or other devices can be used to control door movement. In many cases, the hardware used to mount the original door can be used to mount the replacement door. Similarly, a variety of latch designs can be used. In some cases, the latch from the original door can be used.

The materials of construction for the door are not particularly critical. A wide variety of plastics can be used to mold the door. Various types of reinforced and laminated structures can be used, including honeycomb structures. As weight is usually important in aircraft, a lightweight construction is preferred. The main and side panels are preferably molded or formed together as a single piece.

In this invention, the capacity of an overhead storage bin is increased simply by removing the existing door and installing the replacement door. If any shelf extension is needed, it is added at the same time. In preferred instances, the replacement doors are mounted using the same mounting holes as were used for the original doors, so installation is quite simplified. When a shelf extension is needed, the preferred type is a replacement bullnose. It is easily installed in preferred cases by removing the original bullnose and installing the new one using the same mounting holes.

Although this invention is applicable to many models and designs of aircraft, the problem of unduly narrow overhead storage bins is particularly acute on single-aisle commercial passenger airliners, especially those having narrow-body designs. Of particular note is the Airbus narrow body, single-aisle family of aircraft, such as the A318, A319 and A320 aircraft of the type manufactured as of the filing date of this application and before. The invention is also suitable with respect to Boeing 767, 756 and 737 aircraft of the type manufactured as of the filing date of this application and before. The invention is also applicable to wide-body, dual-aisle passenger aircraft such as the Boeing 747 and the Airbus 330/340 model series manufactured as of the filing date of this application and before. Depending on the design of overhead storage bins in future models, this invention may also be of interest for aircraft bearing these model designations that are manufactured thereafter.

It will be appreciated that many modifications can be made to the invention as described herein without departing from the spirit of the invention, the scope of which is defined by the appended claims.

## Claims

1. A door for an overhead storage bin, wherein the overhead storage bin has a substantially horizontal shelf having a front edge, substantially vertical bulkheads each of which has a front edge and a top edge and extends upwardly from the shelf, and a substantially horizontal roof that has a front edge and connects to the top edges of the vertical bulkheads, the door comprising
(A) a main panel that is outwardly curved such that when the door is closed, (1) a top edge of the main panel approximately meets and is approximately aligned with the front edge of the roof of the storage bin, (2) a bottom edge of the main panel approximately meets and approximately aligns with the front edge of the shelf or an extension thereof, and (3) at least one side edge of the main panel approximately aligns with one of the bulkheads of the overhead storage bin and the main panel is spaced apart from the front edge of the bulkhead so a gap is formed between the side edge of the main panel and the front edge of the bulkhead, and
(B) a side panel attached to the side edge of the main panel and being sized and shaped so that when the door is closed, a rear edge of the side panel meets and aligns with the front edge bulkhead and the side panel fills the space between the main panel and the bulkhead.

2. An overhead storage bin comprising
(A) a substantially horizontal shelf having a front edge,
(B) substantially vertical bulkheads each of which has a front edge and a top edge and extends upwardly from the shelf,
(C) a substantially horizontal roof that has a front edge and connects to the top edges of the vertical bulkheads, and
(D) a door comprising
(1) a main panel that is outwardly curved such that when the door is closed, (a) a top edge of the main panel approximately meets and is approximately aligned with the front edge of the roof of the storage bin, (b) a bottom edge of the main panel approximately meets and approximately aligns with the front edge of the shelf or an extension thereof, and (c) at least one side edge of the main panel approximately aligns with one of the bulkheads of the overhead storage bin and the main panel is spaced apart from the front edge of the bulkhead so a gap is formed between the side edge of the main panel and the bulkhead, and
(2) a side panel attached to the side edge of the main panel and being sized and shaped so that when the door is closed, a rear edge of the side panel meets and aligns with the bulkhead and the side panel fills the gap between the main panel and the bulkhead.

3. A method for increasing the volume of an overhead storage bin wherein the overhead bin has a substantially horizontal shelf having a front edge, substantially vertical bulkheads each of which has a front edge and a top edge and extends upwardly from the shelf, a substantially horizontal roof that has a front edge and connects to the top edges of the vertical bulkheads, and a door panel having bottom, side and top edges that meet the front edges of the shelf, at least one bulkhead and roof, respectively, when the door is closed, comprising
(A) removing the door and
(B) installing a hinged replacement door on the storage bin so that the replacement door opens upwardly and closed downwardly,
wherein the replacement door comprises
(1) a main panel that is outwardly curved such that when the door is closed, (a) a top edge of the main panel approximately meets and is approximately aligned with the front edge of the roof of the storage bin, (b) a bottom edge of the main panel meets and approximately aligns with the front edge of the shelf or an extension thereof, and (c) at least one side edge of the main panel approximately aligns with one of the bulkheads of the overhead storage bin and the main panel is spaced apart from the front edge of the bulkhead so a gap is formed between the side edge of the main panel and the front edge of the bulkhead, and
(2) a side panel attached to said side edge of the main panel and being sized and shaped so that when the door is closed, a rear edge of the side panel meets and aligns with the front edge of the bulkhead and the side panel fills the gap between the main panel and the bulkhead.

4. The method of claim 3, wherein the front-to-back dimension of the overhead bin is increased to at least 22 inches (56 cm) at a height of 9 inches (23 cm) above the shelf and at all lower heights.

5. The method of claim 3, wherein the front-to-back inside dimension of the overhead bin at a height of 9 inches (23 cm) above the shelf is increased by at least one inch (2.54 cm).

6. The method of claim 3, further comprising (C) installing a shelf extension to the front edge of the shelf.

7. The method of claim 6 wherein the shelf extension extends the shelf inboardly from ¼ inch to 1 foot (0.63-30 cm).

8. The method of claim 3 wherein the main panel has two side edges, each of which approximately aligns with a bulkhead of the overhead storage bin, and a side panel is attached to each of said the side edges of the main panel, so that a read edge of each side pane meets and aligns with the front edge of one of the bulkheads and each side panel fills the gap between the main panel and one of the bulkheads.

9. The method claim 3 wherein the main panel has two side edges, only one of which approximately aligns with a bulkhead of the overhead storage bin.

10. The method of claim 3 wherein the overhead storage bin is an aircraft overhead storage bin.

11. The method of claim 3 wherein the aircraft is a single-aisle commercial passenger aircraft.

12. The method of claim 11 wherein the aircraft is an Airbus A318, A319 or A320 model aircraft manufactured as of the filing date of this application and before.
